# EUROPÄISCHE PATENTANMELDUNG

(11) **EP 0 933 335 A1**
(43) Veröffentlichungstag der Anmeldung: **04.08.1999**
(21) Anmeldenummer: 99101263.4
(22) Anmeldetag: 23.01.1999
(51) Int. Cl.: C02F 3/10

(54) **Vorrichtung zur biologischen Behandlung von insbesondere Abwasser**

(30) Priorität: 28.01.1998 DE 29801304 U; 15.07.1998 DE 29812564 U
(71) Anmelder: Norddeutsche Seekabelwerke GmbH, 26954 Nordenham (DE)
(72) Erfinder: Bittner, Hans-Jürgen, 26954 Nordenham (DE)
(74) Vertreter: Möller, Friedrich, Dipl.-Ing.

(57) **Zusammenfassung**

Vorrichtungen zur biologischen Behandlung von insbesondere Abwasser verfügen über mindestens einen Festbettkörper (20) als Träger für die zur biologischen Behandlung erforderlichen Bakterien. Der Festbettkörper (20) ist innerhalb eines Behandlungsbeckens auf einem Auflager (21) angeordnet. Der Festbettkörper (20) ist aus Füllkörperblöcken (25) gebildet, die üblicherweise im zu behandelnden Abwasser eingetaucht sind und demzufolge zum Aufschwimmen neigen. Um das zu verhindern, sind über dem Festbettkörper (20) Balken angeordnet, die durch Stangen mit dem Auflager verbunden sind. Die Balken decken einen Großteil der Stirnseiten der oberen Füllkörperblöcke (25) ab, wodurch die Effektivität des Festbettkörpers (20) beeinträchtigt wird.

Bei der erfindungsgemäßen Vorrichtung ist vorgesehen, die stangenförmigen Niederhaltermittel direkt mit freiliegenden Enden oberer Füllkörperblöcke (25) zu verbinden, wodurch die Stirnseiten ganzer Rohre der Füllkörperblöcke (25) abdeckende Balken entfallen können. Es wird so auf verblüffend einfache Weise die Wirksamkeit der erfindungsgemäßen Vorrichtung verbessert.

## Beschreibung

Die Erfindung betrifft eine Vorrichtung zur biologischen Behandlung von insbesondere Abwasser gemäß dem Oberbegriff des Anspruchs 1.

Vorrichtungen der eingangs genannten Art verfügen über mindestens einen auf einem Auflager angeordneten Festbettkörper. Der Festbettkörper weist mindestens teilweise miteinander verbundene Füllkörperblöcke auf. Die üblicherweise quaderförmigen Füllkörperblöcke werden gebildet aus rasterartig zusammengesetzten Rohren, die mantelseitig und/oder an ihren gegenüberliegenden Stirnseiten miteinander verbunden sind. Bei dei Rohren handelt es sich vorzugsweise um Kunststoffrohre mit netzartig strukturierter Mantelfläche, nämlich sogenannte Gitterrohre.

Der Festbettkörper dient als Träger für die zur biologischen Behandlung erforderlichen Bakterien, nämlich eines sogenannten biologischen Rasens. Hier haben sich die Gitterrohre mit ihrer netzartig strukturierten Mantelfläche als zuverlässiger und wirksamer Träger für den biologischen Rasen bewährt.

Vor allem die obenliegenden Füllkörperblöcke des üblicherweise vollständig im zu behandelnden Abwasser eingetauchten Festbettkörpers neigen zum Aufschwimmen. Zumindest diese (oberen) Füllkörperblöcke müssen deshalb niedergehalten werden, wozu es bereits bekannt ist, quer über die Oberseite des Festbettkörpers, insbesondere die freiliegenden Enden der oberen Füllkörperblöcke, Balken zu legen, die außen mit einem Rahmen verbunden sind, der wiederum durch stangenförmige Niederhaltermittel mit dem Auflager des Festbettkörpers verbunden ist. Die sich quer über die Oberseite des Festbettkörpers erstreckenden Balken decken einen erheblichen Teil der Stirnseite der oberen Füllkörperblöcke ab. Die abgedeckten Stirnseiten von Rohren der oberen Füllkörperblöcke können deshalb vom zu behandelnden Abwasser nicht durchströmt werden, wodurch die Effektivität solcher in bekannter Weise mit dem Auflager verbundenen Festbettkörper merklich reduziert ist.

Der Erfindung liegt nun die Aufgabe zugrunde, eine Vorrichtung zur biologischen Behandlung von insbesondere Abwasser zu schaffen, wobei eine Verbindung mindestens oberer Füllkörperblöcke mit einem Auflager in einfacher Weise ohne eine nennenswerte Beeinträchtigung der Wirksamkeit der Behandlung gewährleistet ist.

Eine Vorrichtung zur Lösung dieser Aufgabe weist die Merkmale des Anspruchs 1 auf. Dadurch, daß die Niederhaltermittel mit freiliegenden Enden oberer Füllkörperblöcke in Kontakt stehen, können die Füllkörperblöcke überspannende und die offenen Stirnseiten ganzer Rohre der Füllkörperblöcke abdeckende Balken entfallen. Insbesondere die längsgerichtete vertikale Durchströmung der Rohre der Füllkörperblöcke wird dadurch verbessert. Der Kontakt der Niederhaltermittel mit den Füllkörperblöcken kommt dadurch zustande, daß die Niederhaltermittel direkt, also ohne zusätzliche Mittel, an oberen Randbereichen der betreffenden Füllkörperblöcke unmittelbar anliegen. Der Kontakt der Niederhaltermittel mit den Füllkörperblöcken kann aber auch dadurch zustande kommen, daß zwischen den Niederhaltermitteln und den freiliegenden Enden entsprechender Rohre der oberen Füllkörperblöcke Mittel zur Lastverteilung, insbesondere Unterlegscheiben oder dergleichen, angeordnet sind. Entscheidend ist, daß die die oberen Enden der Rohre der Füllkörperblöcke abdeckenden großflächigen Balken oder dergleichen bei der erfindungsgemäßen Vorrichtung nicht mehr vorhanden sind.

Die Niederhaltermittel können U-förmig über die freiliegenden Enden entsprechender Rohre der obenliegenden Füllkörperblöcke herumgeführt sein. Denkbar ist es aber auch, die Niederhaltermittel mit oberen Endbereichen bestimmter Rohre der Füllkörperblöcke direkt zu verbinden, und zwar durch Knoten, Schrauben und/oder Schweißen. Durch diese Maßnahmen wird sichergestellt, daß die Verbindung der Niederhaltermittel mit entsprechenden Rohren der vorzugsweise obenliegenden Füllkörperblöcke nicht dazu führt, daß der (horizontale) Querschnitt, insbesondere Kreisquerschnitt, der betreffenden Rohre nennenswert verringert wird.

Weiterhin ist vorgesehen, die Niederhaltermittel derart mit den Füllkörperblöcken, insbesondere bestimmten Rohren derselben, zu verbinden, daß die Niederhaltermittel auf Spannung stehen und dadurch auch die übereinanderliegenden Füllkörperblöcke fest zusammengehalten werden. Dadurch ist sichergestellt, daß bei wechselnden Auftriebskräften der Zusammenhalt der insbesondere übereinandergestapelten Füllkörperblöcke erhalten bleibt und somit Bewegungen zwischen denselben wirksam vermieden werden. Vorzugsweise Sind die Füllkörperblöcke durch elastische bzw. federnde Vorspannung mit dem Auflager verbunden. Dadurch können fertigungsbedingte und/oder temperaturbedingte Längenänderungen ausgeglichen und Zerstörungen vermieden werden.

Nach einem weiteren, gegebenenfalls eine selbständige Lösung der eingangs genannten Aufgabe darstellenden Vorschlag der Erfindung können die Niederhaltermittel auch mit einem unteren Ende bzw. Endbereich der obenliegenden Füllkörperblöcke verbunden sein. Es sind dann praktisch die Unterseiten der obenliegenden Füllkörperblöcke mit den Auflagern verbunden, wodurch ebenfalls ein Aufschwimmen der Füllkörperblöcke vermieden wird. Die zum Eintritt der zu behandelnden Flüssigkeit dienenden obenliegenden Stirnseiten der oberen Füllkörperblöcke sind dann völlig frei von irgendwelchen Einengungen ihrer stirnseitigen Öffnungen. Als Niederhaltermittel kommen praktisch alle denkbaren Zugstränge in Betracht. Aufgrund dessen können die Zugstränge seilartig ausgebildet sein, indem sie aus Seilen, Gurten oder monofilen Fasern gebildet sind. Voraussetzung ist, daß diese Materialien verrottungsfest sind. Aufgrund dessen eignen sich besonders gut Kunstfasern bzw. Stahldrähte, und zwar vor allem auch solche, die in gewissem Maße dehnbar sind und dadurch ein Zusammenhalten der übereinandergestapelten Füllkörperblöcke mit Vorspannung gewährleisten. Es können aber auch als Zugstränge Stangen, und zwar vorzugsweise solche aus rostfreiem Material, dienen.

Es ist weiterhin vorgesehen, die Zugstränge ganz oder teilweise durch Zwischenräume zwischen benachbarten Rohren der Füllkörperblöcke hindurchzuführen. Solche Zwischenräume entstehen als Zwickel vor allem dann, wenn - wie an sich üblich - zur Bildung der Füllkörperblöcke kreisrunde Rohre verwendet werden. Die zwischen vier benachbarten kreisrunden Rohren stehenden Zwickel bilden einen genügend großen Zwischenraum zum Hindurchführen der Zugstränge durch die Füllkörperblöcke. Die Zwischenräume zwischen den benachbarten Rohren eignen sich deshalb besonders zum Hindurchführen der Zugstränge durch die Füllkörperblöcke, weil dadurch die zylindrischen Innenräume der Rohre frei bleiben zum ungestörten Hindurchströmen von Flüssigkeiten durch die Füllkörperblöcke der Festbettkörper.

Gemäß einem weiteren Vorschlag der Erfindung, bei dem es sich auch um eine eigenständige Lösung der eingangs genannten Aufgabe handeln kann, sind die übereinanderliegenden Füllkörperblöcke des Festbettkörpers durch mindestens ein durchgehendes Rohr, bei dem es sich auch um ein Gitterrohr handeln kann, miteinander verbunden. Jedes durchgehende Rohr erstreckt sich somit mindestens über die gesamte Höhe des Festbettkörpers, also durch alle übereinandergestapelten Füllkörperblöcke hindurch. Es ist aber auch denkbar, die durchgehenden Rohre länger auszubilden, indem Endbereiche der durchgehenden Rohre unten und/oder oben über den Festbettkörper vorstehen. Vor allem die vorstehenden Abschnitte der durchgehenden Rohre eignen sich besonders gut vor Verbindung der Enden der durchgehenden Rohre mit dem Auflager einerseits und den obenliegenden Füllkörperblöcken andererseits.

Durch die Verwendung der durchgehenden Rohre zur Verbindung der Füllkörperblöcke untereinander und Verbindung derselben mit dem Auflager erhalten die durchgehenden Rohre eine Mehrfachfunktion. Sie dienen nämlich nicht nur zur Sicherung der Füllkörperblöcke gegen seitliche Verschiebung; vielmehr gleichzeitig zur Bildung der Niederhaltermittel. Zusätzliche Niederhaltermittel werden so überflüssig, wonach jegliche Einschränkung des Querschnitts zur Durchströmung der Füllkörperblöcke vermieden wird.

Bevorzugte Ausführungsbeispiele der Erfindung werden nachfolgend anhand der Zeichnung näher erläutert. In dieser zeigen:
- Fig. 1: eine schematische Seitenansicht der Vorrichtung,
- Fig. 2: ein Ausführungsbeispiel einer Verbindung dreier übereinandergestapelter Füllkörperblöcke mit einem Auflager,
- Fig. 3: eine Draufsicht auf die Oberseite eines oberen Füllkörperblocks der Fig. 2,
- Fig. 4: eine vergrößerte Einzelheit IV aus der Fig. 3,
- Fig. 5: ein weiteres Ausführungsbeispiel der Erfindung in einer Ansicht analog zur Fig. 2,
- Fig. 6: eine Draufsicht auf den oberen Füllkörperblock der Fig. 5,
- Fig. 7: eine vergrößerte Einzelheit VII aus der Fig. 6,
- Fig. 8: eine alternative Befestigungsart in einer Ansicht analog zur Fig. 7,
- Fig. 9: eine alternative Befestigungsart in einer Ansicht analog zur Fig. 7,
- Fig. 10: eine alternative Befestigungsart in einer Ansicht analog zur Fig. 7,
- Fig. 11: ein weiteres Ausführungsbeispiel der Erfindung in einer Ansicht analog zur Fig. 2,
- Fig. 12: ein weiteres Ausführungsbeispiel der Erfindung in einer Ansicht analog zur Fig. 2, und
- Fig. 13: eine Draufsicht auf einen oberen Füllkörperblock bei der Ausführungsform der Fig. 12.
- Fig. 14: ein weiteres Ausführungsbeispiel der Erfindung in einer Ansicht analog zur Fig. 4,
- Fig. 15: eine Lastverteilungsplatte des Ausführungsbeispiels der Fig. 14 in einem vergrößerten Schnitt XV-XV aus der Fig. 14,
- Fig. 16: ein anderes Ausführungsbeispiel der Erfindung in einer Ansicht gemäß Fig. 15,
- Fig. 17: eine Einzelheit einer Befestigung einer Stange an einem Auflager, und
- Fig. 18: eine alternative Befestigung der Stange am Auflager in einer Ansicht analog zur Fig. 17.

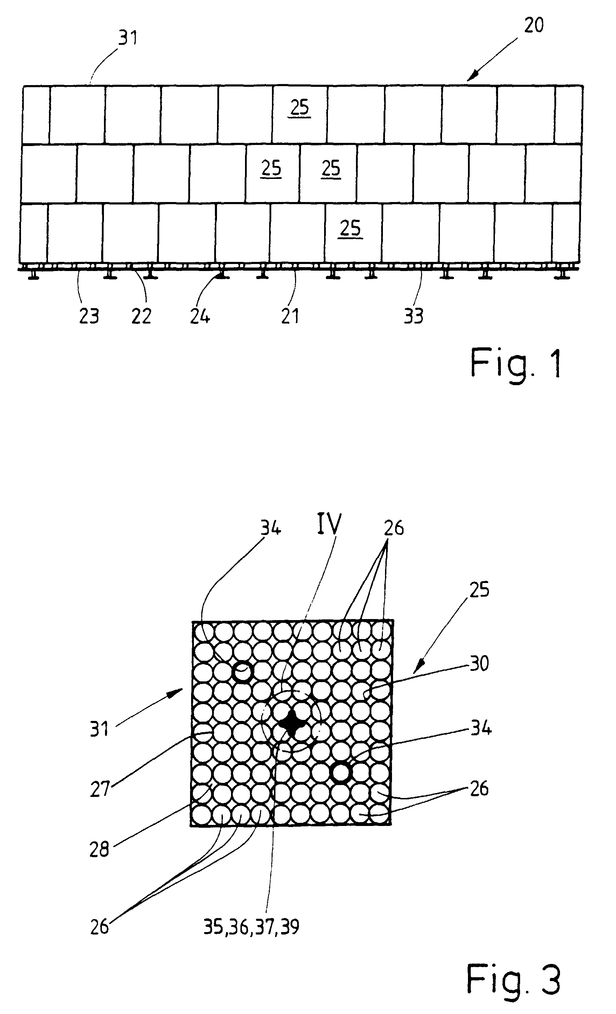

Die hier gezeigte Vorrichtung dient zur biologischen Behandlung von Flüssigkeiten, insbesondere zur biologischen Abwasserbehandlung. Die Vorrichtung verfügt über einen in der Fig. 1 exemplarisch gezeigten Festbettkörper 20, der in einem nicht gezeigten Behälter, beispielsweise einer Betonwanne, angeordnet ist. Der Behälter weist eine Höhe auf, die es gewährleistet, daß der Festbettkörper 20 vollständig in dem zu reinigenden Abwasser eingetaucht ist. Der Festbettkörper 20 ruht im Behälter auf einem Auflager 21, bei dem es sich beispielsweise um einen horizontalen Rahmen aus Querstreben 22 und Längsstreben 23 handelt. Die Querstreben 22 sind über den Längsstreben 23 angeordnet, so daß der Festbettkörper 20 auf den Querstreben 22 des Auflagers 21 aufliegt. Das Auflager 21 verfügt darüber hinaus über Füße 24 , die mit den Querstreben 22 oder Längsstreben 23 verbunden sind und sich auf dem Boden des Behälters abstützen. Die Füße 24 bilden einen Zwischenraum zwischen dem Boden des Behälters und den Querstreben 22 sowie Längsstreben 23, in dem nicht gezeigte Bodenbelüfter angeordnet sind.

Der Festbettkörper 20 besteht im gezeigten Ausführungsbeispiel aus drei Schichten von jeweils neben- und hintereinander angeordneten Füllkörperblöcken 25. Im vorliegenden Falle sind die Füllkörperblöcke 25 der mittleren Schicht gegenüber den Füllkörperblöcken 25 der oberen und unteren Schicht versetzt, so daß der Festbettkörper 20 aus einer Art Mauerverbund zusammengesetzter Füllkörperblöcke 25 gebildet ist. Die Füllkörperblöcke 25 sind quaderförmig ausgebildet. Bis auf einige randseitige Füllkörperblöcke halber Größe sind die Füllkörperblöcke 25 untereinander gleich ausgebildet, weisen insbesondere eine gleiche Größe auf. Die Anzahl der Schichten des Festbettkörpers 20 kann vom gezeigten Ausführungsbeispiel mit drei Schichten abweichen. Insbesondere sind mehr als drei Schichten üblich.

Jeder Füllkörperblock 25 ist aus einer Mehrzahl senkrechter Rohre 26 gleicher Abmessungen, insbesondere gleicher Länge, zusammengesetzt. Die Rohre 26 sind als Gitterrohre mit netzförmig strukturierter Mantelfläche ausgebildet. Hergestellt sind die als Gitterrohre ausgebildeten Rohre 26 aus einem thermoplastischen Kunststoff.

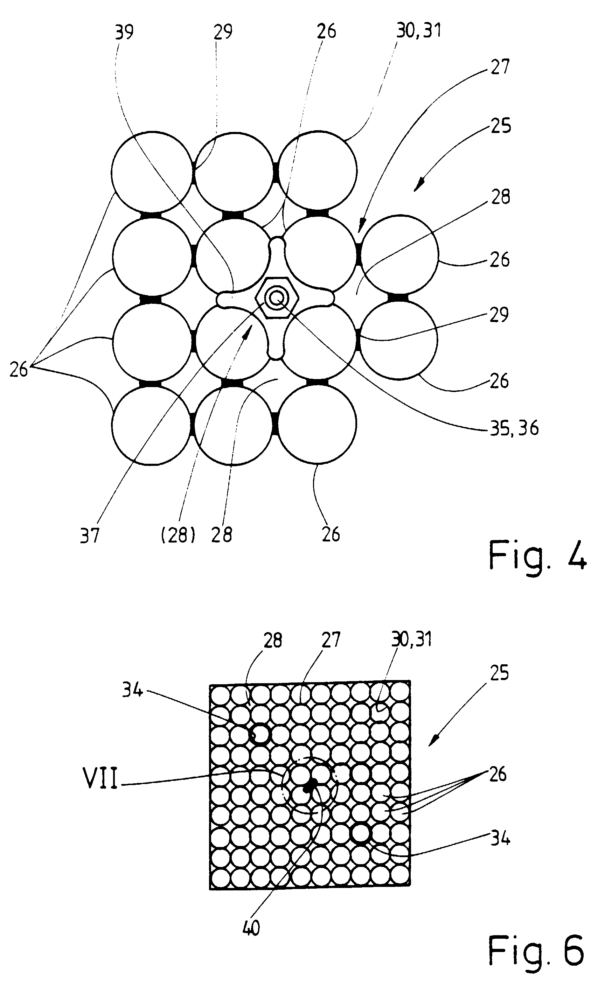

Aus der beispielsweise in der Fig. 3 gezeigten Draufsicht auf einen Füllkörperblock 25 geht hervor, daß die Rohre 26 senkrecht gerichtet, also mit senkrechter Längsmittelachse, reihenund zeilenweise nebeneinanderliegend angeordnet sind, derart, daß benachbarte Rohre 26 mit ihren äußeren Mantelflächen an ebenfalls senkrechten Berührungslinien 27 miteinander in Kontakt stehen, nämlich aneinander anliegen. Weiterhin ist insbesondere aus der Fig. 3 ersichtlich, daß jeweils zwischen vier zusammenliegenden Rohren 26 ein in Längsrichtung derselben verlaufender, zwickelartiger Zwischenraum 28 gebildet ist. Die Rohre 26 jedes Füllkörperblocks 25 sind in an sich bekannter Weise verbunden, und zwar vorzugsweise durch eine Spiegelschweißung ihrer beispielsweise in der Fig. 3 erkennbaren offenen Stirnseiten. Alle Rohre 26 jedes Füllkörperblocks 25 sind somit an gegenüberliegenden Stirnseiten miteinander verbunden, nämlich verschweißt. Dadurch entstehen an den gegenüberliegenden Stirnseiten der Rohre 26 an den Berührungspunkten benachbarter Rohre 26 auf der Berührungslinie 27 liegende Verbindungsstellen 29. Zusätzlich oder alternativ ist es denkbar, weitere Verbindungsstellen auf den Berührungslinien 27 vorzusehen, und zwar insbesondere in den Bereichen zwischen gegenüberliegenden Stirnseiten der Rohre 26.

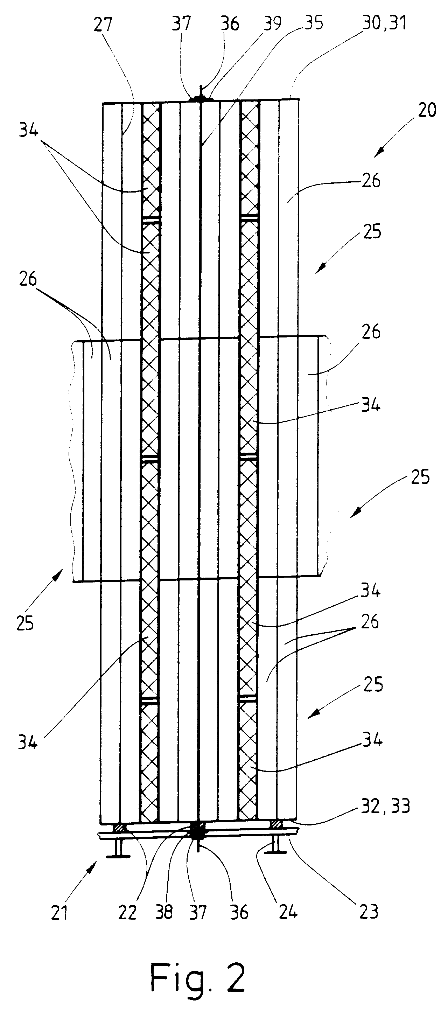

Freie Stirnseiten 20 der Rohre 26 obenliegender Füllkörperblöcke 25 befinden sich allesamt in einer horizontalen Ebene, die eine Oberseite 31 des Festbettkörpers 20 bildet. Ebenso befinden sich freie Stirnseiten 32 der unteren Füllkörperblöcke 25 in einer gemeinsamen horizontalen Ebene, die eine auf den Querstreben 22 eines Auflagers 21 ruhende Unterseite des Festbettkörpers 20 bilden. Aus insbesondere den Fig. 2 und 3 wird deutlich, daß zur Sicherung gegenüber einer Querverschiebung die übereinanderliegenden Füllkörperblöcke 25 unterschiedlicher Schichten verbunden sind durch Rohre 34, die sich teilweise durch zwei übereinanderliegende Füllkörperblöcke 25 erstrecken. Diese Rohre 34 sind nach dem Zusammensetzen des Festbettkörpers 20 aus entsprechenden Füllkörperblöcken 25 durch die Füllkörperblöcke 25 gesteckt. Dazu fehlen an zwei diagonal gegenüberliegenden Stellen (Fig. 3) in dem jeweiligen Füllkörperblock 25 fest miteinander verbundene Rohre 26. Durch die diagonale Anordnung zweier von den Rohren 34 zu besetzenden Stellen zur Verbindung benachbarter Füllkörperblöcke 25 ist sichergestellt, daß auch bei einem in der Fig. 3 gezeigten Versatz der Füllkörperblöcke 25 unterschiedliche Schichten aller Füllkörperblöcke 25 durch die Rohre 24 miteinander verbunden sind.

Wegen der Bildung der Füllkörperblöcke 25 aus Kunststoff und das völlige Eintauchen des Festbettkörpers 20 in das zu reinigende Abwasser neigen mindestens die Füllkörperblöcke 25 der obersten Schicht zum Aufschwimmen. Zur Verhinderung eines solchen Aufschwimmens sind die Füllkörperblöcke 25 der oberen Lage des Festbettkörpers 20 durch Niederhaltermittel mit dem Auflager 21 verbunden. Die Niederhaltermittel sind derart mit den Füllkörperblöcken 25 der oberen Lage des Festbettkörpers 20 einerseits und dem Auflager 21 andererseits verbunden, daß sie unter Spannung stehen und somit die Füllkörperblöcke 25 ebenfalls mit Spannung gegen das Auflager 21 gedrückt werden. Alle Niederhaltermittel stützen sich somit auf den Füllkörperblöcken 25 der oberen Lage einerseits und an bzw. unter dem Auflager 21 andererseits ab, und zwar vorzugswesie direkt bzw. unmittelbar. Es ist darüber hinaus auch denkbar, daß die Niederhaltermittel direkt, insbesondere formschlüssig mit den Füllkörperblöcken 25 vorzugsweise der oberen Lage verbunden sind.

Die Fig. 2 bis 4 zeigen eine erste Möglichkeit der Verbindung der Füllkörperblöcke 25 des Festbettkörpers 20 mit dem Auflager 21. Bei diesem Ausführungsbeispiel finden Stangen 35 Verwendung, die senkrecht durch den gesamten Festbettkörper 20 verlaufen, also über alle übereinandergestapelten Schichten aus Füllkörperblöcken 25 hindurch sich erstrecken. Die Stangen 35 aus Edelstahl oder verzinktem bzw. kunststoffummanteltem Stahl, sind im gezeigten Ausführungsbeispiel durch die zwickelartigen Zwischenräume 28 der übereinanderliegenden Füllkörperblöcke 25 hindurchgeführt. Dies geschieht bezüglich der senkrecht übereinanderliegenden Füllkörperblöcke 25 der oberen und unteren

Lage so, daß sich jede Stange 35 durch einen mittigen Zwischenraum 28 erstreckt. In der mittleren Lage erstreckt sich jede Stange 35 durch einen Zwischenraum zwischen zwei benachbarten Füllkörperblöcken 25, die seitlich gegenüber den Füllkörperblöcken 25 der oberen und unteren Lage um die halbe Breite eines Füllkörperblocks 25 versetzt sind. Somit brauchen die Stangen 35 durch die Füllkörperblöcke 25 der mittleren Lagen nicht hindurchgeführt zu werden, weil hier der jeweilige Zwischenraum 28 zwischen benachbarten Füllkörperblöcken 25 durch ein entsprechendes Zusammensetzen derselben entsteht.

Jede Stange 35 ist etwas länger als die Höhe des Festbettkörpers 20, so daß sie mit gegenüberliegenden Endbereichen 36 gegenüber der Oberseite 31 und der Unterseite 33 des Festbettkörpers 20 und somit auch gegenüber den freien Stirnseiten 30 und 32 der Rohre 26 vorsteht. Mindestens diese vorstehenden Endbereiche 36 der jeweiligen Stange 35 sind mit einem Gewinde versehen zur Aufnahme einer Mutter 37. Zur Befestigung der Stange 35 am Auflager 21 ist der untere Endbereich 36 der Stange 35 mittig durch eine Querstrebe 22 hindurchgeführt. Unter der Querstrebe 22 ist im gezeigten Ausführungsbeispiel noch eine Unterlegscheibe 38 angeordnet, der die Mutter 37 zugeordnet ist. Auf der Oberseite 31 des Festbettkörpers 20 sind die oberen Füllkörperblöcke 25 ebenfalls gehalten durch eine auf den Endbereich 36 aufgeschobene Lastverteilungsplatte 39 und eine darüber angeordnete Mutter 37. Die Lastverteilungsplatte 39 ist in besonderer Weise ausgebildet. Sie weist in Draufsicht (Fig. 4) etwa die Gestalt eines Kreuzes mit gerundeten Ecken auf. Die Lastverteilungsplatte 39 liegt dadurch auf einem Teil der freien Stirnseiten 30 der vier den Zwischenraum 28 begrenzenden Rohre 26 auf, durch den die Stange 35 hindurchgeführt ist. Infolge der besonderen Gestaltung der Lastverteilungsplatte 39 sind die freien Stirnseiten 30 der den Zwischenraum 28 für die Stange 35 begrenzenden Rohre 26 kaum verdeckt, so daß insbesondere der vertikal gerichtete Durchfluß des zu behandelnden Abwassers durch diese Rohre 26 nicht nennenswert beeinträchtigt ist. Alternativ ist es auch denkbar, die Lastverteilungsplatte 39 größer auszubilden, damit sie sich über weitere Bereiche der freien Stirnseiten 30 der entsprechenden Rohre 26 erstrecken kann. In diesem Falle ist die Lastverteilungsplatte abgesehen von der Bohrung zum Hindurchführen des Endbereichs 36 der Stange 35 mit weiteren Bohrungen versehen, die einen Durchfluß des zu reinigenden Abwassers ermöglichen.

Abweichend von der Darstellung der Fig. 2 bis 4 ist es zum Beispiel möglich, zwischen der Mutter 37 und der Lastverteilungsplatte 39 eine Druckfeder anzuordnen zur elastischen Vorspannung der vertikalen Verbindung der Füllkörperblöcke 25.

Vorzugsweise ist jeder Füllkörperblock 25 der oberen Schicht des Festbettkörpers 20 über eine mittige Stange 35 mit dem Auflager 21 verbunden. Bei Bedarf ist es aber auch denkbar, jedem Füllkörperblock 25 mehrere Stangen 35 zuzuordnen. Es ist ebenfalls denkbar, ein Ende der Stange 35 mit einem U-förmig umgebogenen Haken zu versehen, der entweder um eine entsprechende Querstrebe 22 des Auflagers 21 herumgreift oder von oben in die freie Stirnseite 30 eines Rohrs 26 hineinragt und damit um die freie Stirnseite 30 des Rohrs 26 herumgeführt ist.

Es ist alternativ auch denkbar, die jeweilige Stange 35 durch ein Rohr 26 des entsprechenden Füllkörperblocks 25 sowohl mittig oder außermittig hindurchzuführen. Dann bleiben die Zwischenräume 28 zwischen benachbarten Rohren 26 frei.

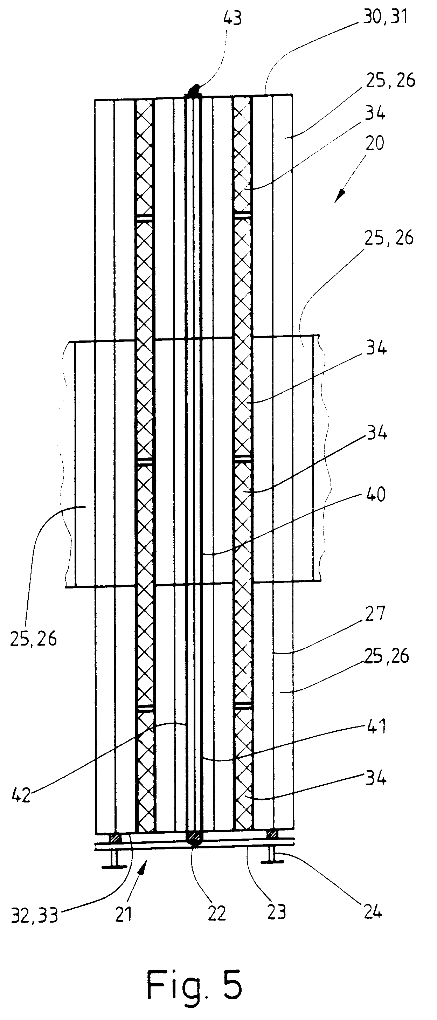

Die Fig. 5 bis 11 zeigen Ausführungsbeispiele der Vorrichtung, bei denen die Füllkörperblöcke 25 mit dem Auflager durch biegeschlaffe Zugstränge verbunden sind. Im gezeigten Ausführungsbeispiel sind die Zugstränge als Seile, und zwar vorzugsweise verrottungsfeste Kunststoffseile, ausgebildet.

Beim Ausführungsbeispiel der Fig. 5 bis 7, was hinsichtlich der Anordnung und Ausbildung der Füllkörperblöcke 25 dem zuvor beschriebenen Ausführungsbeispiel entspricht, so daß für gleiche Teile gleiche Bezugsziffern verwendet werden, findet ein endlos gemachtes Seil 40 Verwendung. Das Seil 40 ist durch zwei benachbarte Rohre 26 der Füllkörperblöcke 25 hindurchgeführt. Bezogen auf die obere und untere Lage handelt es sich um mittlere Rohre 26 der Füllkörperblöcke 25. Somit verläuft durch benachbarte Rohre 26 jeweils ein senkrechter Strang 41, 42 des Seils 40. An der Unterseite 33 des Festbettkörpers 20 ist das Seil 40 endlos um eine Querstrebe 22 des Auflagers 21 herumgeführt. An der Oberseite 31 des Festbettkörpers 20 ragen aus benachbarten, mittigen Rohren 26 jedes Füllkörperblocks 25 die beiden Enden der Stränge 41 und 42 des Seils 40 heraus. Diese beiden Enden der Stränge 41 und 42 sind an der Oberseite 31 des jeweiligen Füllkörperblocks 25 an einer Verbindungsstelle 43 miteinander verbunden. Diese Verbindung kann durch Knoten oder übliche lösbare und unlösbare Seilverbindungen, beispielsweise Quetschhülsen, gebildet sein.

Alternativ ist es denkbar, die beiden Enden der Stränge 41 und 42 an gegenüberliegenden Enden eines Spannmittels, beispielsweise eines Spannschlosses, zu befestigen, was wiederum durch Knoten geschehen kann. Durch ein Zusammendrehen des Spannschlosses läßt sich das vorzugsweise elastische Seil 40 spannen, um die Füllkörperblöcke 25 unterschiedlicher Lagen des Festbettkörpers 20 zusammen und gegen das Auflager 21 zu drücken. Das Spannschloß kann sowohl im Bereich der Oberseite 31 des Festbettkörpers 20 angeordnet sein also auch im Bereich der Unterseite 33 desselben.

Alternativ ist es auch möglich, die Enden der Stränge 41 und 42 des Seils 40 mit starren Endstücken zu versehen, bei denen es sich beispielsweise um Haken handelt, die einfach oben über den Rand des jeweiligen Rohrs 26 gehängt oder zusammengehakt werden. Es ist auch denkbar, Endstücke mit einem Außengewinde zu versehen, die durch eine Lastverteilungsplatte auf den freien Stirnseiten 30 der betreffenden Rohre 26 gesteckt und mit Muttern gespannt und in der gespannten Position arretiert werden, analog zum Ausführungsbeispiel der Fig. 4.

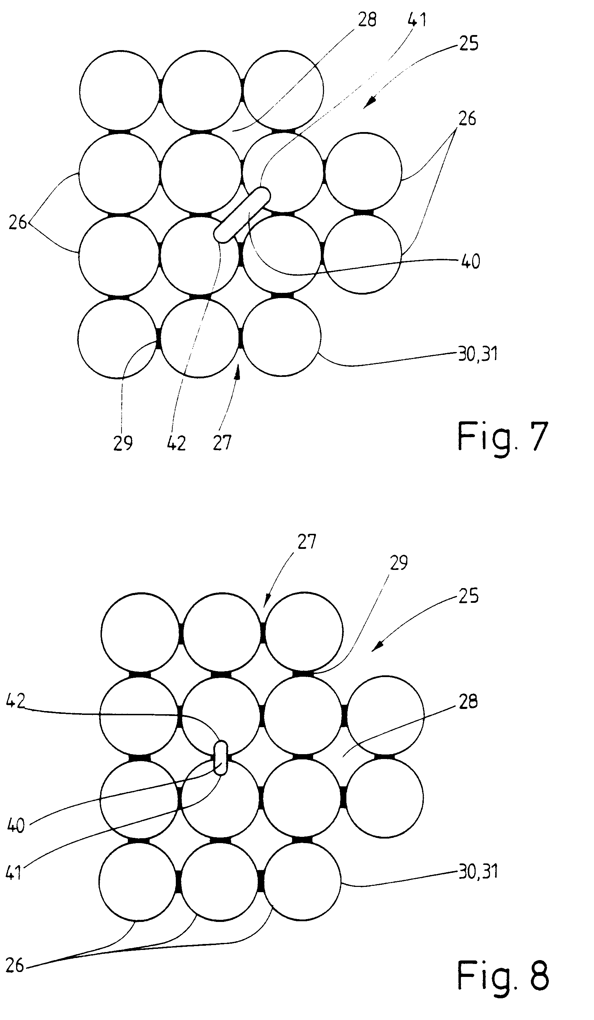

Die Fig. 7 läßt erkennen, daß das Seil 40 an der Oberseite 31 des Festbettkörpers 20 über die Ränder der freien Stirnseiten 30 der beiden jeweils einen Strang 41 und 42 des Seils 40 aufnehmenden Rohre 26 geführt ist, und zwar über den Zwischenraum 28 zwischen diesen beiden Rohren 26 hinweg.

Im Ausführungsbeispiel der Fig. 8 ist das Seil 40 an der Oberseite 31 des Festbettkörpers 20 über im Bereich einer Verbindungsstelle 29 aneinanderliegende Bereiche von Rändern freier Stirnseiten 30 der die Stränge 41 und 42 aufnehmenden Rohre 26 geführt. In diesem Falle erstreckt sich das Seil 40 nicht über einen Zwischenraum 28 zwischen zwei benachbarten Rohren 26 hinweg.

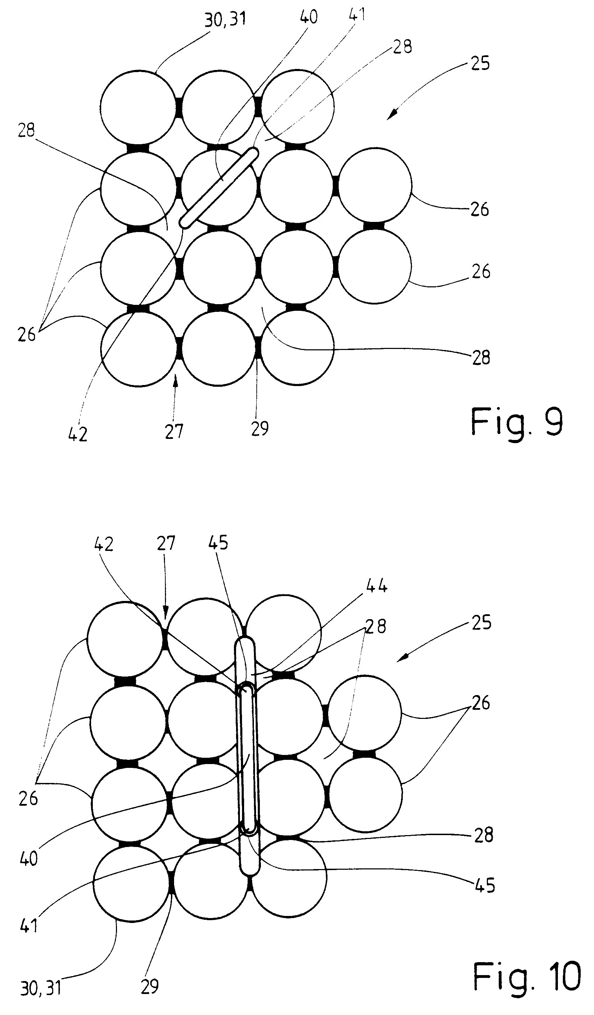

Im Ausführungsbeispiel der Fig. 9 sind die Stränge 41 und 42 des Seils 40 durch zwei benachbarte Zwischenräume 28 auf gegenüberliegenden Seiten eines Rohrs 26 geführt. An der Oberseite 31 des Festbettkörpers 20 kreuzt die Verbindung der Stränge 41 und 42 des Seils 40 dadurch ein Rohr 26, nämlich das Rohr 26, das von den Zwischenräumen 28 begrenzt wird, durch das die Stränge 41 und 42 hindurchgeführt sind.

Beim Ausführungsbeispiel der Fig. 10 ist eine längliche, ovale Lastverteilungsplatte 44 vorgesehen, die auf zueinandergerichteten Abschnitten der freien Stirnseite 30 von zwei nebeneinanderliegenden Gruppen aus vier jeweils aufeinanderfolgenden Rohren 26 aufliegt. Dadurch wird die Spannkraft des Seils 40 auf acht Rohre 26 verteilt, ohne daß dabei durch die schmale, längliche Ausbildung der Lastverteilungsplatte 44 die freien Stirnseiten 30 dieser Rohre 26 von der Lastverteilungsplatte 44 nennenswert verdeckt werden. Die Lastverteilungsplatte 44 verfügt über zwei Bohrungen 45, welche im gezeigten Ausführungsbeispiel über zwei Zwischenräumen 28 liegen. Zwischen diesen beiden Zwischenräumen 28 befindet sind ein Zwischenraum 28, der von der Lastverteilungsplatte 44 überbrückt ist. Durch diejenigen Zwischenräume 28, über denen sich die Bohrungen 45 der Lastverteilungsplatte 44 befinden, ist jeweils ein Strang 41 und 42 des Seils 40 hindurchgeführt. Zum Übergang der Stränge 41, 42 vom einen Zwischenraum 28 auf den übernächsten Zwischenraum 28 ist das Seil 40 endlos über die Lastverteilungsplatte 44 hinweggeführt.

Alternativ ist es möglich, den Abschnitt des Seils 40, der sich zwischen den Bohrungen 45 über der Lastverteilungsplatte 44 befindet, zu nutzen, um hier liegende Endbereiche des Seils 40 zu verbinden, und zwar in einer der weiter vorstehenden beschriebenen Weisen, also entweder durch Knoten oder sonstige Verbindungsmittel.

Es ist alternativ auch denkbar, die Lastverteilungsplatte 44 so auszubilden, daß die Stränge 41 und 42 durch zwei benachbarte Zwischenräume 28 hindurchführbar sind oder zwischen den Zwischenräumen 28, die die Stränge 41 und 42 aufnehmen, mehr als ein leerer Zwischenraum 28 sich befindet.

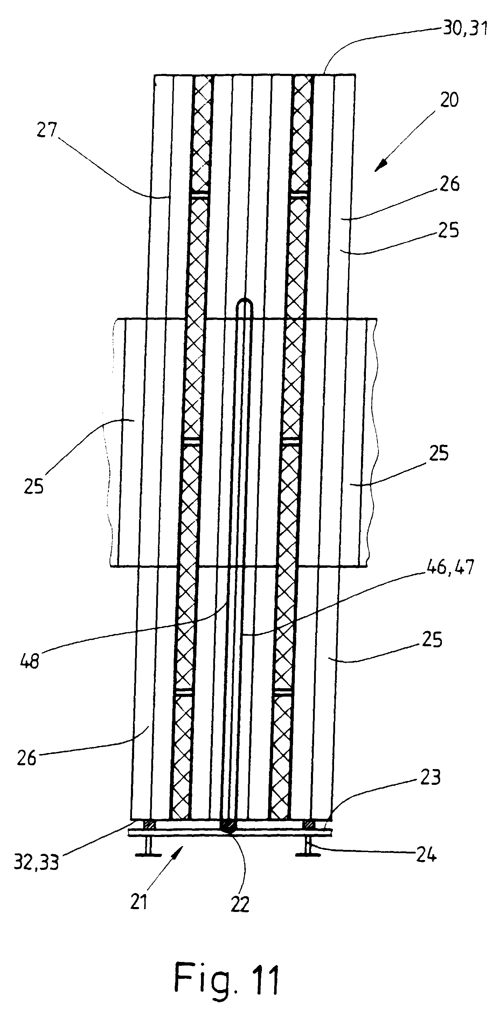

Beim Ausführungsbeispiel der Fig. 11 sind die Füllkörperblöcke 25 mit dem Auflager 21 ebenfalls durch ein Seil 46 verbunden. Stränge 47 und 48 des Seils 46 sind hier aber nur durch die Füllkörperblöcke 25 der beiden unteren Lagen des Festbettkörpers 20 geführt, und zwar wiederum durch benachbarte, mittige Rohre 26. Die Stränge 47 und 48 sind am oberen Ende endlos miteinander verbunden. Im Bereich der Verbindung der Stränge 47 und 48 ist der obere Bereich des Seils 46 durch Durchbrüche in den netzförmigen Mantelflächen der Rohre 26 in der Nähe der Unterseite der oberen Füllkörperblöcke 25 hindurchgeführt. Somit erstreckt sich das Seil 46 bei diesem Ausführungsbeispiel nicht durch den größeren, oberen Bereich der obenliegenden Füllkörperblöcke 25. Dadurch bleibt die Oberseite 31 des Festbettkörpers 20 völlig frei von irgendwelchen Einschnürungen der freien Stirnseiten 30 der Rohre 26. Das aus der Unterseite 33 des Festbettkörpers 20 aus den untenliegenden Füllkörperblöcken 25 herausgeführte Seil 46 ist wiederum um eine entsprechende Querstrebe 22 des Auflagers 21 geführt. Im Bereich der Querstrebe 22 sind die Enden des Seils 46 miteinander verbunden. Diese Verbindung kann in der im Zusammenhang mit dem Ausführungsbeispiel der Fig. 5 beschriebenen Weise durch Knoten oder andere Verbindungsmittel erfolgen.

Alternativ ist es denkbar, die Enden der Stränge 47 und 48 des Seils 46 zum unteren Bereich der obenliegenden Füllkörperblöcke 25 zu führen und mit Haken zu versehen, die in Öffnungen der netzförmigen Mantelfläche der Rohre 26 eingehakt sind.

Nach einer weiteren Alternative ist es möglich, ein oder mehrere Seile mit beidseitig offenen Enden zu verwenden, wobei sämtliche Enden solcher Seile mit Haken versehen sind, die einerseits in Durchbrüche der netzförmigen Mantelfläche im unteren Bereich der obenliegenden Füllkörperblöcke 25 eingehakt sind und andererseits mit der entsprechenden Querstrebe 22 verhakt sind.

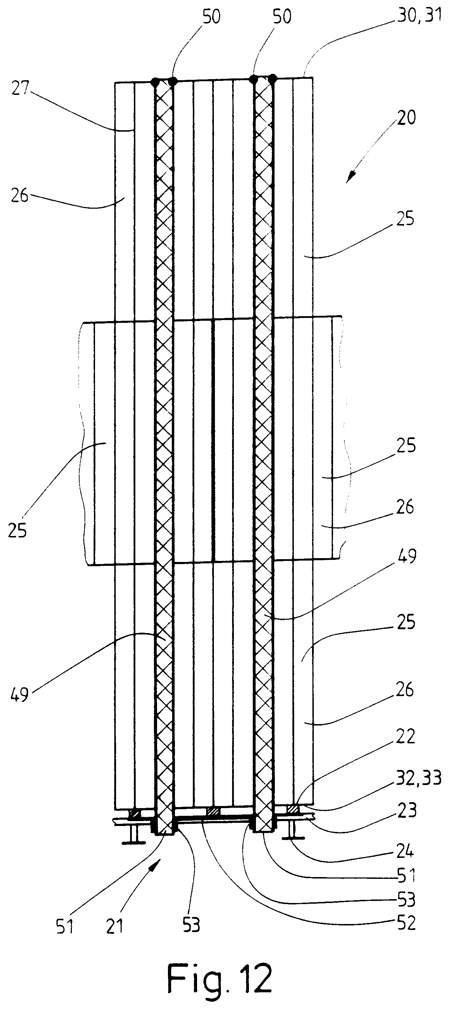

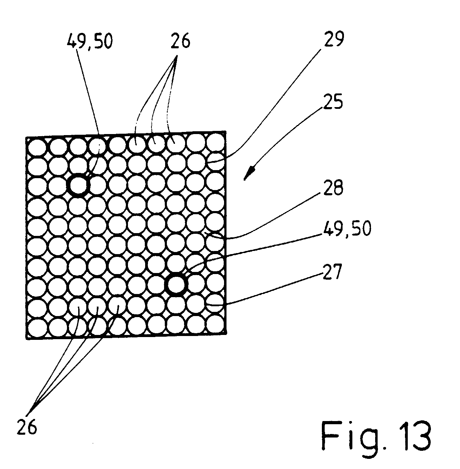

Die Fig. 12 und 13 zeigen ein Ausführungsbeispiel der erfindungsgemäßen Vorrichtung, bei der die Füllkörperblöcke 25 in unterschiedlichen Lagen des Festbettkörpers 20 sowohl miteinander als auch mit dem Auflager 21 verbunden sind durch vorzugsweise zwei durchgehende (lange) Rohre 49 jedes Füllkörperblocks 25. Die durchgehenden Rohre 49 dienen dann gleichzeitig wie eingangs beschrieben zur Sicherung der Relativposition des Verbundes der Füllkörperblöcke 25 zur Bildung des Festbettkörpers 20, übernehmen also die Funktion der Rohre 34 der vor-stehend beschriebenen Ausführungsbeispiele. Jedoch finden hier nicht mehrere versetzte Rohre Verwendung, sondern die besagten durchgehenden Rohre 49. Auch die durchgehenden Rohre 49 werden nachträglich in entsprechende Fehlstellen in den Füllkörperblöcken 25 eingeschoben, und zwar nachdem die Füllkörperblöcke 25 in ihre zur Bildung des Festbettkörpers 20 dienende Relativposition zueinander gebracht worden sind.

Im gezeigten Ausführungsbeispiel schließen die durchgehenden Rohre 49 mit der Oberseite 31 des Festbettkörpers 20 etwa bündig ab. Verbunden sind die oberen Enden der durchgehenden Rohre 49 mit den benachbarten Rohren 26 der Füllkörperblöcke 25 durch Schweißen, wodurch Verbindungsstellen 50 zwischen freien Stirnseiten 30 benachbarter Rohre 26 und der durchgehenden Rohre 49 zustande kommen, die den Verbindungsstellen 29 zur Verbindung der übrigen Rohre 26 der Füllkörperblöcke 25 etwa entsprechen.

Die durchgehenden Rohre 49 ragen gegenüber der Unterseite 33 des Festbettkörpers 20 nach unten vor, und zwar soweit, daß sie durch das gitterartige Auflager 21 sich erstrecken. Diese vorstehenden Endbereiche 51 der durchgehenden Rohre 49 dienen zur Verbindung derselben mit dein Auflager 21. Zu diesem Zweck ist im gezeigten Ausführungsbeispiel eine sich über den Bereich beider durchgehender Rohre 49 des jeweiligen Füllkörperblocks 25 erstreckende Platte 52 vorgesehen, die unter den Querstreben 22 anliegt. Die Platte 52 weist Bohrungen zum Durchtritt der vorstehenden Endbereiche 51 der durchgehenden Rohre 49 auf. Die Bohrungen sind umgeben durch mit der Platte 52 verbundene Klemmschellen 53, die klemmend von außen um den Mantel der vorstehenden Endbereiche 51 der durchgehenden Rohre 49 herum-geführt sind und damit eine reibschlüssige Verbindung der Platte 52 mit den Endbereichen 51 der durchgehenden Rohre 49 herstellen. Über die Platte 52 und die Klemmschellen 53 sind somit die durchgehenden Rohre 49, nämlich ihre vorstehenden Endbereiche 51, mit den Querstreben 22 des Auflagers 21 verbunden.

Alternativ ist es denkbar, die durchgehenden Rohre 49 auch an der Oberseite 31 des Festbettkörpers 20 mit vorstehenden Endbereichen zu versehen und zur Herstellung eines unmittelbaren Kontakts der durchgehenden Rohre 49 mit der Oberseite 31 der obenliegenden Füllkörperblöcke 25 des Festbettkörpers 20 die durchgehenden Rohre 49 durch Klemmschellen mit einer Platte zu verbinden.

Eine weitere denkbare Alternative besteht darin, hintere Bereiche untenliegender Füllkörperblöcke 25 direkt mit dem Auflager (21) zu verbinden. Die Füllkörperblöcke 25 der oberen Lagen sind dann mit den Füllkörperblöcken 25 der unteren Lage separat verbunden, wozu gegebenenfalls die vorstehend beschriebenen Verbindungstechniken verwendet werden können.

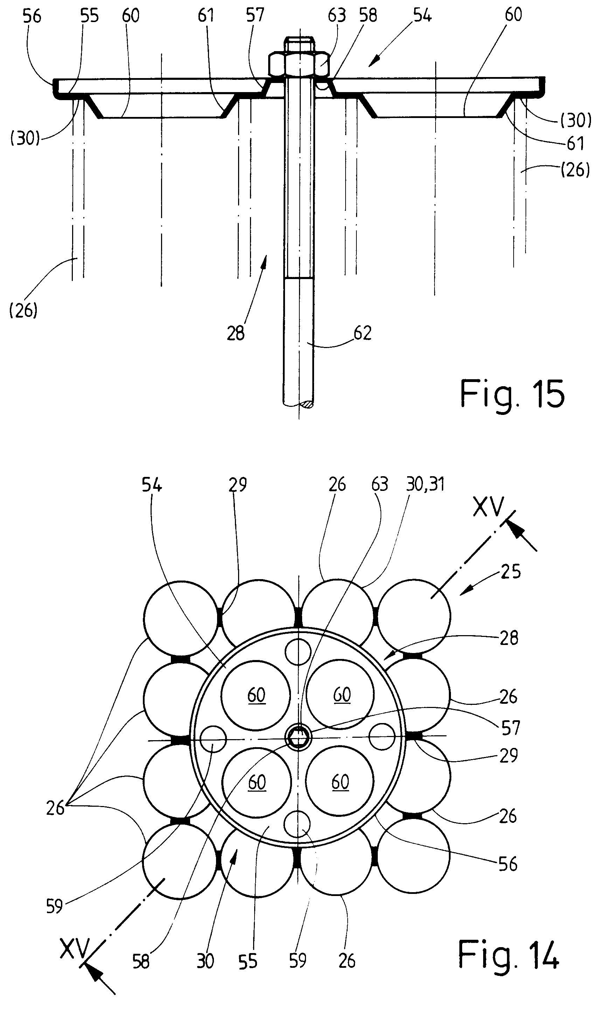

Die Fig. 14 und 15 zeigen ein alternatives Ausführungsbeispiel zur Lastverteilungsplatte 39 der Fig. 2 bis 4. Die hier gezeigte Lastverteilungsplatte 54 verfügt über eine flache kreisförmige Scheibe 55. Die Scheibe 55 ist außen umgeben von einem umlaufenden Kragen 56, der gegenüber der Ebene der Scheibe 55 im eingebauten Zustand (Fig. 15) nach oben weist.

In der Mitte weist die Scheibe 55 eine (wie der Kragen 56) nach oben gerichtete Erhöhung 57 auf. In dieser Erhöhung 57 befindet sich eine mittige Durchgangsbohrung 58.

Die Scheibe 55 verfügt des weiteren über vier äußere Durchgangsbohrungen 59, die gleichmäßig auf den Umfang der Scheibe 55 verteilt sind und sich in der Nähe des umlaufenden Kragens 57 befinden.

Die Scheibe 55 verfügt außerdem über vier große Durchgangsbohrungen 60, die gleichmäßig auf die Fläche der Scheibe 55 verteilt sind und deren Mittelpunkte auf den Ecken eines zentrisch zur mittigen Durchgangsbohrung 59 angeordneten (gedachten) Vierecks liegen. Jede der großen Durchgangsbohrungen 60 ist umgeben von einer Kegelstumpfwandung 61, die von der Scheibe 55 aus nach unten weist (Fig. 15).

Die Kegelstumpfwandung 61 und jede große Durchgangsbohrung 60 sind so bemessen, daß sie eine Zentrierung der Lastverteilungsplatte 54 gegenüber den Rohren 26 des jeweiligen Füllkörperblocks 25 herbeiführen, wenn die Lastverteilungsplatte 54 mit nach unten weisenden Kegelstumpfwandungen 61 auf die Oberseite 31 des entsprechenden Füllkörperblocks 25 aufgelegt ist. Des weiteren sind die vier großen Durchgangsbohrungen 60 und ihre Kegelstumpfwandungen 61 derart der Scheibe 55 zugeordnet, daß bei auf die freie Stirnseite 30 des Füllkörperblocks 25 aufgelegter Lastverteilungsplatte 54 die Kegelstumpfwandungen 61 von oben in die freie Stirnseite 30 von vier zwischen sich ein zwickelhaltigen Zwischenraum 28 einschließenden Rohren 26 hineingreifen. Dadurch ist die jeweilige Lastverteilungsplatte 54 auf der Oberseite 31 des betreffenden Füllkörperblocks 25 unverschieblich und zentriert gehalten. Dabei stabilisieren die gegenüber der Ebene der Scheibe 55 abgewinkelten Kegelstumpfwandungen 61 die Scheibe 55, und zwar ebenso wie der Kragen 56 und die Erhöhung 57.

Die Durchgangsbohrungen 59 nahe der Innenseite des Kragens 56 liegen jeweils zwischen zwei benachbarten großen Durchgangsbohrungen 60 und sind derart positioniert, daß sie sich über jeweils einen zwickelartigen Zwischenraum 28 zwischen vier benachbarten Rohren 26 des Füllkörperblocks 25 befinden. Auf diese Weise gewährleisten sowohl die Durchgangsbohrungen 59 als auch die großen Durchgangsbohrungen 60 im Bereich der freien Stirnseiten 30 von vier benachbarten Rohren 26 des Füllkörperblocks 25 den Durchfluß von zu reinigendem Wasser durch die Oberseite 31 bzw. die entsprechenden Stirnseiten 30 des Füllkörperblocks 25.

Die mittige Durchgangsbohrung 58 in der Erhöhung 57 der Lastverteilungsplatte 54 dient zum Hindurchführen eines mit einem Gewinde versehenen oberen Endes einer Stange 62. Auf dieses freie Ende der Stange 62 ist eine Mutter 63 geschraubt, die an der Oberseite der Erhöhung 27 der Lastverteilungsplatte 54 anliegt. Gegebenenfalls kann eine zweite Kontermutter vorgesehen sein. Die Stange 62 führt mittig durch einen zwickelartigen Zwischenraum 28 zwischen den vier Rohren 26, auf denen die Lastverteilungsplatte 54 aufgelegt ist. In der Fig. 15 sind obere Endbereiche zweier Rohre punktstrichstrichliniert angedeutet.

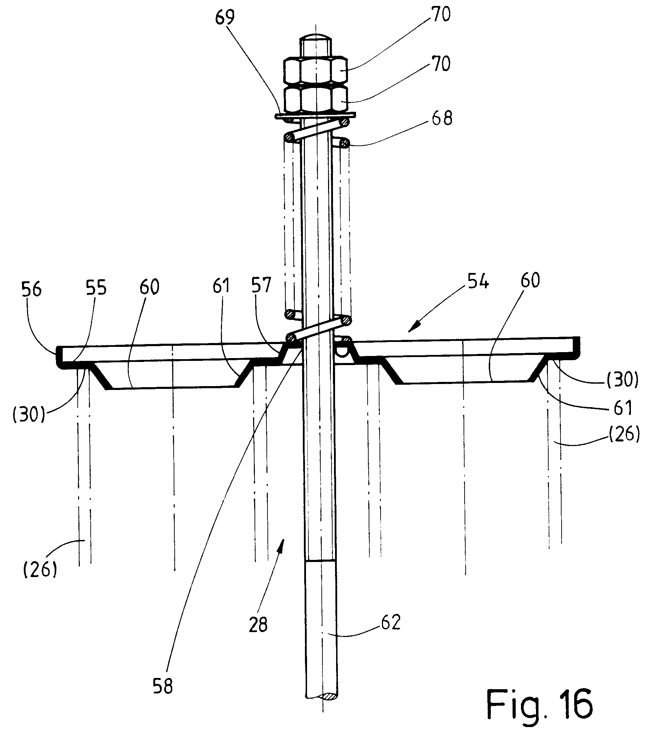

Die Fig. 16 zeigt ein Ausführungsbeispiel der Verbindung der Stange 62 mit der Lastverteilungsplatte 54, das im wesentlichen dem Ausführungsbeispiel der Fig. 15 entspricht. Für gleiche Teile sind gleiche Bezugsziffern verwendet worden. Beim Ausführungsbeispiel der Fig. 16 ragt ein längerer Endbereich der Stange 62 nach oben über die Lastverteilungsplatte 54 vor. Auf diesem längeren Endbereich der Stange 62 ist im gezeigten Ausführungsbeispiel eine Druckfeder 68 angeordnet. Gegebenenfalls können auch mehrere Druckfedern oder andere Federmittel, beispielsweise Gummifedern oder Tellerfedern, vorgesehen sein. Oberhalb der Druckfeder 68 ist auf der Stange 62 eine Unterlegscheibe 69 angeordnet und darüber befinden sich zwei Muttern 70. Durch entsprechend weites Aufschrauben der Muttern 70 auf dem mit einem Außengewinde versehenen Endbereich der Stange 62 erfolgt eine Vorspannung der Druckfeder 68. Nach Einstellung einer entsprechenden Spannung der Druckfeder 68 werden die beiden Muttern 70 gegeneinander verspannt, nämlich gekontert. Durch die trotz der Vorspannung noch nachgiebige Druckfeder 68 erfolgt eine elastische Andrückung der übereinander angeordneten Füllkörperblöcke 25 gegen das Auflager 21. Auf diese Weise können durch die in entgegengesetzten Richtungen nachgiebige Druckfeder 68 toleranzbedingte und insbesondere temperaturbedingte Längenänderungen der Stange 62 einerseits und der übereinanderliegenden Füllkörperblöcke 25 andererseits ausgeglichen werden, ohne daß es zu einer übermäßigen Belastung der Füllkörperblöcke 25 und einer daraus eventuell resultierenden Beschädigung derselben kommen kann. Die Druckfeder 68 ist so bemessen und so weit vorgespannt, daß sie die gesamte Auftriebskraft der übereinandergestapelten Füllkörperblöcke 25 kompensiert. Es ist aber auch denkbar, die Druckfeder 68 so auszubilden oder nur so weit vorzuspannen, daß sie einen Teil, beispielsweise 40 bis 90%, insbesondere etwa 55%, der maximalen Auftriebskraft der von der Stange 62 gegen das Auflager 21 gedrückten übereinander angeordneten Füllkkörperblöcke 25 abfedert bzw. aufnimmt.

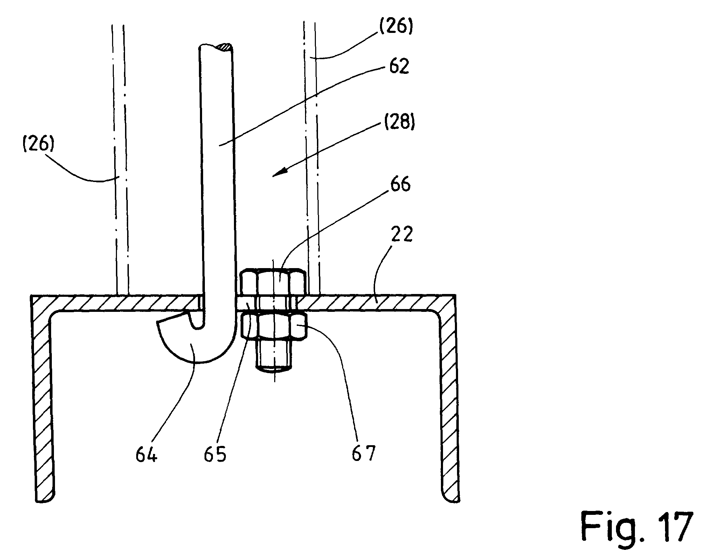

Ein unteres Ende der Stange 62 ist in der Fig. 17 gezeigt. Dieses untere Ende der Stange 62 ist mit einem Hakenende 64 versehen, das durch ein etwa U-förmiges Umbiegen des Endes der Stange 62 gebildet ist. Die Stange 62 ist mit ihrem Hakenende 64 mit einer Querstrebe 22 des Auflagers 21 verbunden. Die hier als U-Profil ausgebildete Querstrebe 22 verfügt zu diesem Zweck über ein Langloch 65, das derart bemessen ist, daß das U-förmig umgebogene Hakenende 54 der Stange 62 von oben durch die Querstrebe 22 des Auflagers 21 gesteckt werden kann. Anschließend wird die Stange 62 mit dem Hakenende 64 auf eine Seite des Langlochs 65 geschoben, wodurch das Hakenende 64 unter einem horizontalen Schenkel des U-Profils der Querstrebe 22 zur Anlage gelangt (Fig. 17). Gegen unbeabsichtigtes Verrutschen des Hakenendes 64 im Langloch 65 und einem damit verbundenen Lösen der Stange 62 von der Querstrebe 22 ist nach dem Verankern des Hakenendes 64 im Langloch 65 der seitlich neben der Stange 62 bzw. dem Hakenende 64 sich befindende Freiraum des Langlochs 65 ausgefüllt durch eine durch das Langloch 65 hindurchgeschobene Schraube 66 und eine hierauf aufgeschraubte Mutter 67. Gegebenenfalls kann zum Sichern der Schraubverbindung auf die Schraube 66 eine zweite Kontermutter aufgeschraubt sein.

Nachdem die Stange 62 mit dem Hakenende 64 in der in der Fig. 17 gezeigten Weise mit der Querstrebe 22 des Auflagers 61 verbunden und hier formschlüssig gesichert ist, wird die Stange 62 vorgespannt. Dabei werden die Füllkörperblöcke 25 des Festbettkörpers 20 gegen das Auflager 21 gedrückt und gegen Aufschwimmen gesichert. Zur diesem Zweck wird nach dem Auflegen der Lastverteilungsplatte 54 auf die Oberseite 31 des betreffenden oberen Füllkörperblocks 25 die Mutter 62 auf das Gewinde am oberen Ende der Stange 62 aufgedreht und festgezogen.

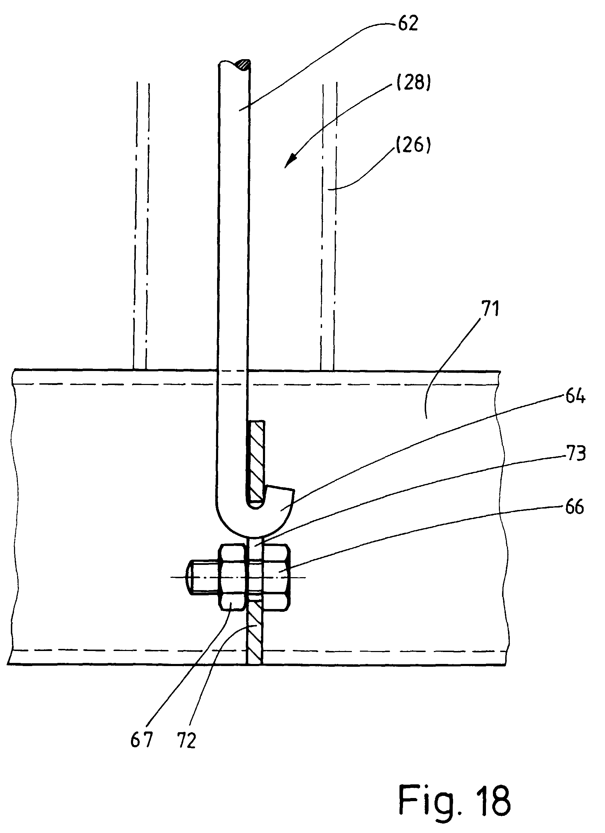

Die Fig. 18 zeigt eine gegenüber der Fig. 17 abgewandelte Befestigung des unteren Hakenendes 64 der Stange 62 an einer Querstrebe 71 des Auflagers 21. Für gleiche Gegenstände werden wiederum gleiche Bezugsziffern verwendet.

Im Ausführungsbeispiel der Fig. 18 ist die Querstrebe 71 mit einer senkrechten, plattenförmigen Strebe 72 versehen. Die Strebe 72 kann zwischen benachbarten Querstreben 71 durchgehend verlaufen; aber auch nur als ein Vorsprung der Querstrebe 71 ausgebildet sein. In der Strebe 72 befindet sich ein senkrechtes Langloch 73, in das die Stange 72 mit dem Hakenende 64 eingehängt ist. Zur Sicherung gegen Herausfallen ist beim hier gezeigten Ausführungsbeispiel unter dem Hakenende 64 eine Schraube 66 mit einer Mutter 67 in das Langloch 73 eingeschraubt. Hierdurch wird die mit dem Hakenende 64 in das Langloch 73 eingehängte Stange 62 formschlüssig im Langloch 73 gehalten.

Die in den Fig. 17 und 18 gezeigten Verbindungen der Stange 62 mit dem Auflager 21 können im Zusammenhang mit allen beschriebenen Ausführungsbeispielen der Erfindung Verwendung finden.

### Bezugszeichenliste :

- 20: Festbettkörper
- 21: Auflager
- 22: Querstrebe
- 23: Längsstrebe
- 24: Fuß
- 25: Füllkörperblock
- 26: Rohr
- 27: Berührungslinie
- 28: Zwischenraum
- 29: Verbindungsstelle
- 30: freie Stirnseite
- 31: Oberseite
- 32: freie Stirnseite
- 33: Unterseite
- 34: Rohr
- 35: Stange
- 36: Endbereich
- 37: Mutter
- 38: Unterlegscheibe
- 39: Lastverteilungsplatte
- 40: Seil
- 41: Strang
- 42: Strang
- 43: Verbindungsstelle
- 44: Lastverteilungsplatte
- 45: Bohrung
- 46: Seil
- 47: Strang
- 48: Strang
- 49: durchgehendes Rohr
- 50: Verbindungsstelle
- 51: vorstehender Endbereich
- 52: Platte
- 53: Klemmschelle
- 54: Lastverteilungsplatte
- 55: Scheibe
- 56: Kragen
- 57: Erhöhung
- 58: Durchgangsbohrung
- 59: Durchgangsbohrung
- 60: große Durchgangsbohrung
- 61: Kegelstumpfwandung
- 62: Stange
- 63: Mutter
- 64: Hakenende
- 65: Langloch
- 66: Schraube
- 67: Mutter
- 68: Druckfeder
- 69: Unterlegscheibe
- 70: Mutter
- 71: Querstrebe
- 72: Strebe
- 73: Langloch

## Patentansprüche

1. Vorrichtung zur biologischen Behandlung von insbesondere Abwasser mit mindestens einem Festbettkörper (20) aus Füllkörperblöcken (25), die jeweils mehrere fest miteinander verbundene Rohre (26) mit vorzugsweise netzartig strukturierter Mantelfläche (Gitterrohre) aufweisen, mit einem Auflager (21), auf dem der Festbettkörper (20) angeordnet ist und mit Niederhaltermittel zur Verbindung des Festbettkörpers (20) mit dem Auflager (21), **dadurch gekennzeichnet,** daß sich die Niederhaltermittel an freien Stirnseiten (30) von eine Oberseite (31) des Festbettkörpers (20) bildenden Füllkörperblöcken (25) abstützen.

2. Vorrichtung nach Anspruch 1, dadurch gekennzeichnet, daß die Niederhaltermittel mit freien Stirnseiten (30) benachbarter Rohre (26), insbesondere ausgewählter Rohre (26), obenliegender Füllkörperblöcke (25) verbunden sind oder sich vorzugsweise unmittelbar darauf abstützen.

3. Vorrichtung nach einem der vorhergehenden Ansprüche, dadurch gekennzeichnet, daß die Niederhaltermittel vorgespannt sind, insbesondere federnd vorgespannt sind gegen die Kraft mindestens einer Feder.

4. Vorrichtung nach einem der vorhergehenden Ansprüche, dadurch gekennzeichnet, daß die Niederhaltermittel formschlüssig mit freien Stirnseiten (30) entsprechender Rohre (26) der obenliegenden Füllkörperblöcke (25) verbunden sind, vorzugsweise formschlüssig um Bereiche der freien Stirnseiten (30) herumgeführt sind.

5. Vorrichtung insbesondere nach einem der vorhergehenden Ansprüche, dadurch gekennzeichnet, daß die Niederhaltermittel als biegeschlaffe Zugstränge ausgebildet sind.

6. Vorrichtung nach einem der vorhergehenden Ansprüche, dadurch gekennzeichnet, daß die Niederhaltermittel durch bestimmte Rohre (26) der Füllkörperblöcke (25) und/oder Zwischenräume (28) zwischen benachbarten Rohren (26) der Füllkörperblöcke (25) geführt sind.

7. Vorrichtung nach einem der vorhergehenden Ansprüche, dadurch gekennzeichnet, daß die biegeschlaffen Zugstränge zur Bildung einer einseitigen Verbindung mit entsprechenden Füllkörperblöcken (25) oder dem Auflager (21) endlos ausgebildet sind, insbesondere U-förmig um Bereiche freier Stirnseiten (30) obenliegender Füllkörperblöcke (25) und/oder Teile des Auflagers (21) herumgeführt sind.

8. Vorrichtung nach einem der vorhergehenden Ansprüche, dadurch gekennzeichnet, daß jeder Zugstrang endlos ausgebildet oder endlos gemacht ist und parallele Stränge (41, 42; 47, 48) des jeweiligen Zugstrangs durch benachbarte Rohre (26) oder Zwischenräume (28) zwischen benachbarten Rohren geführt sind.

9. Vorrichtung nach vorzugsweise einem oder mehreren der vorhergehenden Ansprüche, dadurch gekennzeichnet, daß übereinandergestapelte Füllkörperblöcke (25) des Festbettkörpers (20) mit durchgehenden Rohren (49) mindestens untereinander und gegebenenfalls auch mit dem Auflager (21) verbunden sind.

10. Vorrichtung nach Anspruch 9, dadurch gekennzeichnet, daß ein unterer Endbereich (51) jedes durchgehenden Rohrs (49) mit dem Auflager (21) verbunden ist, insbesondere durch mindestens ein zusätzliches Verbindungsorgan, wobei vorzugsweise die durchgehenden Rohre (49) gegenüber der Unterseite (33) des Festbettkörpers (20) in Richtung zum Auflager (21) vorstehende Endbereiche (51) aufweisen.

11. Vorrichtung nach einem der vorhergehenden Ansprüche, dadurch gekennzeichnet, daß die oberen Enden der durchgehenden Rohre (49) mit benachbarten Rohren (46) der obenliegenden Füllkörperblöcke (25) verbunden sind, vorzugsweise durch Schweißen.

12. Vorrichtung nach einem der vorhergehenden Ansprüche, dadurch gekennzeichnet, daß die oberen Enden der durchgehenden Rohre (49) über Stützmittel derart mit den obenliegenden Füllkörperblöcken (25) in Verbindung stehen, daß sie sich an der Oberseite (31) bzw. freien Stirnseiten (30) entsprechender Rohre (26) der Füllkörperblöcke (25) abstützen.

13. Vorrichtung nach einem der vorhergehenden Ansprüche, dadurch gekennzeichnet, daß die Stützmittel vorstehende Zentriermittel zum formschlüssigen Zentrieren der Stützmittel gegenüber entsprechenden Stirnbereichen von Rohren (26) der jeweiligen Festbettkörper (20) und/oder Versteifungs- bzw. Verstärkungsmittel aufweisen.

14. Vorrichtung nach einem der vorhergehenden Ansprüche, dadurch gekennzeichnet, daß vorstehende Endbereiche der durchgehenden Rohre (49) über eine Seite, insbesondere die Oberseite (31), des Festbettkörpers (20) hinausragen, und vorzugsweise die Stützmittel mit gegenüber einer Seite des Festbettkörpers (20) vorstehenden Endbereichen der durchgehenden Rohre (49) verbunden sind.

15. Vorrichtung nach einem der vorhergehenden Ansprüche, dadurch gekennzeichnet, daß die Niederhaltermittel als mit dem Auflager (21) verbundene Stangen (35) ausgebildet sind.

16. Vorrichtung nach Anspruch 14, dadurch gekennzeichnet, daß die Stangen (35) durch Zwischenräume (28) zwischen benachbarten Rohren (26) der Füllkörperblöcke (25) geführt sind.

17. Vorrichtung nach einem der vorhergehenden Ansprüche, dadurch gekennzeichnet, daß die Stangen (35) durch die durchgehenden Rohre (49) oder zur Verbindung der Füllkörperblöcke (25) untereinander dienende (versetzte) Rohre (34) geführt sind.

18. Vorrichtung nach einem der vorhergehenden Ansprüche, dadurch gekennzeichnet, daß mindestens einem Ende der jeweiligen Stange (35) ein Spannmittel, vorzugsweise ein federbelastetes Spannmittel, zugeordnet ist.

19. Vorrichtung nach einem der vorhergehenden Ansprüche, dadurch gekennzeichnet, daß den Spannmitteln sich gegen mindestens einen Teil der freien Stirnseite (30) bestimmter Rohre (26) des jeweiligen Füllkörperblocks (25) abstützende Lastverteilungselemente zugeordnet sind.
